# EUROPEAN PATENT SPECIFICATION

(11) **EP 0 784 571 B1**
(45) Date of publication and mention of the grant of the patent: **13.01.1999**
(21) Application number: 95934656.0
(22) Date of filing: 02.10.1995
(51) Int. Cl.: B65D 17/00, B05B 1/18

(54) **METHOD FOR HYGIENICALLY SEALING DRINK CONTAINERS AND CONTAINERS OBTAINED THEREBY**
VERFAHREN ZUM HYGIENISCHEN ABDICHTEN VON GETRÄNKEBEHÄLTERN, SOWIE DERART HERGESTELLTE BEHÄLTER
PROCEDE DE SCELLEMENT HYGIENIQUE DE RECIPIENTS DE BOISSONS ET RECIPIENTS AINSI OBTENUS

(30) Priority: 12.10.1994 IT PN940063
(43) Date of publication of application: 23.07.1997
(73) Proprietor: GRUSAN di SANDRIN Giannino & C. s.a.s., 33080 Porcia (IT)
(72) Inventor: SANDRIN, Giannino, I-33080 Porcia (IT)
(74) Representative: Giugni, Valter
(86) International application number: EP9503898
(87) International publication number: WO9611851

(56) References cited:
- EP-A- 0 385 954
- FR-A- 2 684 979
- US-A- 4 992 037

## Description

The present invention refers to a method for hygienically sealing drink containers and, in particular, tin or can-type containers provided with a head portion in which a zone is specially pre-arranged to provide an opening from which the drink contained in the can or tin can then be poured.

It is a commonly known fact that drinks of various types, such as for instance beer, fruit juices and the like, are already being largely marketed in tins or cans, mostly made of aluminium. On the head portion of each such tin or can there is normally arranged a tear-off tongue and related ring to set free an opening for delivering the drink contained therein. Most consumers have developed a habit of tearing off said tongue to open the can and, then, directly drinking the liquid by approaching the can to their mouth.

Now, such a habit is clearly a rather questionable and dangerous one from a hygienical point of view, since cans tend to cover themselves with dust, polluting substances, etc. during transportation and the periods spent on warehouse or store shelves.

The problem of protecting drink cans hygienically, particularly in correspondence of their drink delivering or pouring zone which is being brought into direct contact with the mouth of the consumer, has already been identified and coped with since a long time now.

So, for instance, the US patent specification 3,204,805 discloses a solution which, after the whole container, or even only the drink delivering portion thereof, has been duly sterilized, calls for the same container to be protected with a cladding of non-toxic plastic material that is adapted to be removed when the container is being opened.

When the tongue sealing the drink delivery opening of the container is torn off, the protective cladding is cut partially and can then be completely removed by hand (in this connection, see particularly Figs. 6-8).

The above cited patent specification fails however to describe the method used to actually apply such a protective cladding on to the can. From the drawings that accompany the patent, anyway, it can be inferred that such a protective cladding (11) is first moulded and subsequently applied to adhere to the can by a wrapping-up coupling of shapes. In fact, it would not be otherwise possible to explain the particular form of the same cladding, which is so shaped as to enclose the head portion of the container with an angular extension that is greater than 180°. It may be argued that, quite clearly, such a form is actually necessary in order to prevent the cladding from accidentally coming off, ie. detaching from the container when the latter is being handled. The therein disclosed solution, therefore, appears to be rather complicated and expensive, since it requires two distinct operations to be performed, ie. the moulding of the protective cladding and the application thereof on to the container.

Anyway, such a solution, which dates back to more than 30 years ago, can hardly be implemented in practical use any longer, owing to newly introduced environment-safeguard regulations, endorsed by an increasing number of countries throughout the world, according to which the tear-off tongue of drink containers shall not break off the container in view of facilitating the differentiated disposal and recovery of the raw materials involved.

With currently used drink containers, in which the opening tear-off tongue remains in this way attached to the container and is arranged so as to recede into the same container in correspondence of the correspondingly formed drink delivery opening, the solution according to the afore cited patent application turns out to be practically useless, since the protective cladding would not be automatically cut when tearing off the opening tongue. It therefore ensues that such a cladding would have to be torn off by force by the consumer, so that the liquid in the container is quite likely to get spilled.

In view of eliminating the drawbacks connected with the above illustrated solution, different protective concepts have been devised subsequently. So, for instance, the US patent specification 3,362,572 describes a drink can provided with a tear-off opening tongue (C) which remains attached to the head portion of the can. Such a head portion is entirely cladded with a cap (E) of plastic material, the latter being in turn provided with a flexible extension (G) for its removal and a hook-like portion (F) causing the cap to engage the can opening tear-off tongue.

Anyway, even such a solution appears to be quite complicated and expensive, since it requires a specially shaped cap to be moulded under utilization of a considerably greater amount of plastic material. Furthermore, the head portion of the can, when provided with such a cap, becomes fully flat and smooth, ie. without the typical circular raised edge which is on the contrary quite useful to ensure mutual engagement of stacked cans.

The US patent specification 4,749,100 describes a quite more recently devised solution according to which the entire head portion of the can is still cladded with a sheet of suitable material (moulded plastics, paper or the like), which shall anyway be flexible and bio-degradable. Such a sheet shall in addition be given such a shape as to enable it to also wrap around the protruding edge of the can and engage the same edge so as to avoid being accidentally detached therefrom. Even in this case the hygienical protection of the can turns out to be quite complicated and expensive, since it requires the use of special equipment and tools to shape and apply the cladding sheet.

FR-A-2 684 979 discloses a method of sealing a cork for bottles by a film based on a solution of water and hydrophile polymers. The film is produced by dipping the neck of bottles in a fluid mixture and by rotating them so as to ensure a complete coating. Said method suffers from the drawback that the bottles need to be continuously rotated; in addition, it is not convenient for cans, where an excessive and useless amount of sealing material would be required.

It would therefore be desirable, and it is in fact a main purpose of the present invention, to provide a hygienical protection of drink containers according to a solution which is simple and inexpensive to implement, practical in its use and complying with the most recent environmental protection regulations.

The problem is solved by the features of independent method claim 1 and independent product claim 6.

Characteristics and advantages of the solution according to the present invention will be more clearly understood from the description that is given below by way of non-limiting example with reference to the accompanying drawings, in which:
- Figure 1 is a view showing the simple method required to apply the hygienical sealing to the head portion of a drink container according to the present invention;
- Figure 2 is a view of a drink container after the application of the related hygienical sealing according to the present invention;
- Figure 3 is a view showing the opening of the tear-off tongue of the can illustrated in Figure 2; and
- Figure 4 is a view illustrating the hygienical sealing being removed upon opening of the container shown in Figures 2 and 3.

As it can be noticed from the illustrations in the above listed Figures, the method according to the present invention is particularly advantageous for applying a hygienical seal 10 on to that zone of the head portion 11 of a drink can 12 which normally is brought into contact with the mouth of the consumer when the latter selects to drink directly from the can upon opening it.

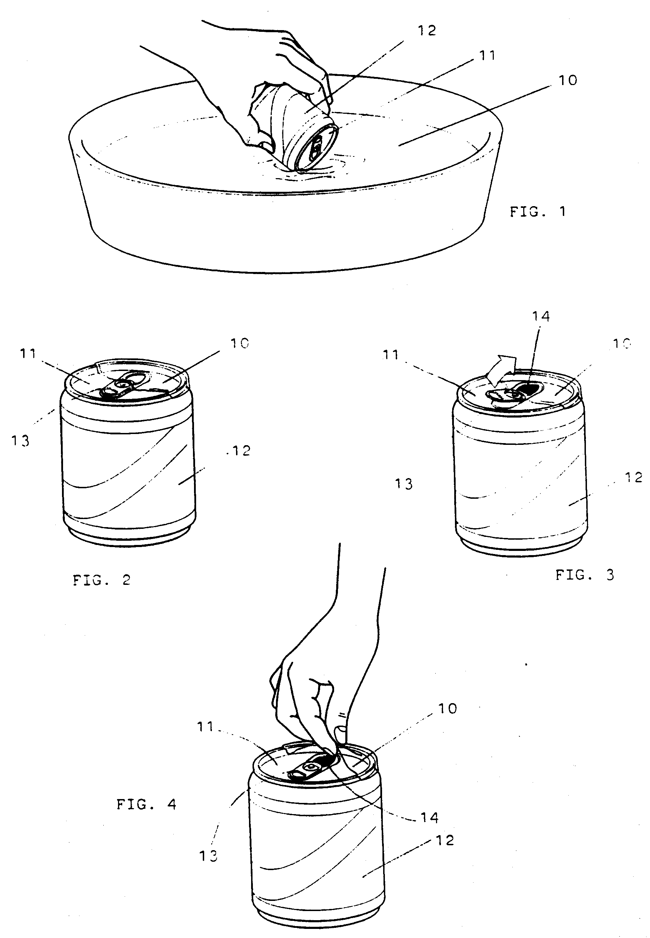

The head portion 11 of the can 12 is usually provided with a tongue 13 which is capable of being torn off so as to unseal an orifice 14 through which the drink can then be delivered. As known, and as shown particularly in Figure 3, said tongue 13 is bent upwards, thereby causing the pre-engraved zone of the head portion 11 sealing the orifice 14 to be cut open.

According to the present invention, the can 12, after having been filled, closed and sterilized, is simply dipped, in an inclined position, into a bath of a non-toxic substance 10 (Figure 1), which is heated to keep it in its liquid state and which hardens and solidifies after just a few seconds after the removal of the can from the bath.

Such a dipping of the can into the sealing bath can be limited to a zone of the head portion 11 and the related edge, so as to seal just the orifice 14 with said sealing substance 10. A coating forms therefore on the head portion 12 which extends to cover an opening (irregular) angular sector which is narrower than 180°. As a result, the usage amount of substance 10 is minimized.

The application of the coating 10 can of course be automated along the same line in which the cans are filled. To this purpose the cans, after their filling, sealing and sterilization, can be conveyed through a bath containing the coating substance. Using means that are commonly known in the art (such as for instance a transfer line), it is in fact possible for the appropriately lined-up cans to be automatically conveyed through the coating/sealing section and turned upside down so as to cause their head portion to be entirely or partly dipped into the bath, the same cans being then removed from the bath by a subsequent rotation returning them into their initial position, ie. with their head portion facing upwards.

In practical use, after raising the tongue 13 and opening the orifice 14, the consumer usually lowers again the tongue 13 against the surface of the head portion 11 in such a way as to prevent it from being impedimental to the mouth of the consumer drinking directly from the can. By tearing off the tongue in this way, the area of coating 10 covering the orifice 14 is caused to break off so that the consumer is now able to conveniently remove the entire coating, as this is best shown in Figure 4.

The substance used to obtain such a coating 10 can be based on any polymeric material having a well-defined melting point, provided that it is non-toxic and biodegradable, or recyclable, and that it can be kept in its liquid state, without any degradation, by warming it at the required temperature and is further able to set within a few seconds upon application. According to current knowledges, however, the material to be used to this purpose is in a preferred manner a thermoplastic rubber of the olefinic type, such as the one that is currently used to obtain sealing gaskets by directly hot-casting the material into its seat.

Conclusively it can therefore be said that the method according to the present invention is particularly simple and cost-effective, since it does not require any special equipment, tool or operation, while the required result is anyway assured with a usage of material which is cut to a minimum. Furthermore, the protective cladding applied in such a manner is able to very closely adhere against the surface of the can, so that it does not hinder a stacking of the cans for storing and transportation, while it is quite easy and convenient to remove when the can has to be opened for drinking. The scope of the present invention is therefore extended to also cover the container resulting from the application of said method, according to the appended claims.

In particular, the fact should be stressed that the containers according to the present invention ensure full compliance with the most recent environmental standards and regulations, since they allow for the materials of the discarded cans (metal and plastics) to be conveniently separated for recovery and subsequent recycling.

It will be appreciated that the afore described method according to the present invention can be applied also to other types of tins and cans that may pose similar hygiene and use problems.

## Claims

1. Method for hygienically sealing drink containers (12), in particular aluminium cans, provided with a pre-engraved zone adapted to create a drink delivery orifice (14) by the use of automatic opening means (13), said orifice being adapted to be brought into contact with the mouth of the consumer and being protected by a coating (10), **characterized in that** said coating (10) is applied to the head portion (11) of the container (12) by solely dipping said portion into a bath of non-toxic and biodegradable, or recyclable, substance that is kept in its liquid state by heating and is capable of adhering and setting within a few seconds upon removal of the container from the bath, said coating (10) extending to cover at least a part of said orifice (14).

2. Method according to claim 1, **characterized in that** said coating (10) extends to cover a circular sector of the head portion (11) with an angular extension that is less than 180°.

3. Method according to claim 1 or 2, **characterized in that** said coating (10) consists of a polymer having a well-defined melting point.

4. Method according to any of the preceding claims, **characterized in that** said coating (10) consists of a thermoplastic rubber of the olefinic type.

5. Method according to any of the preceding claims, **characterized in that** said coating (10) is applied in an automated manner to the drink containers (12), along the same line in which said containers are filled and sterilized, by turning them upside down and dipping them into the bath of said coating substance (10).

6. Drink container, in particular aluminium can, comprising a head portion (11) provided with a pre-engraved zone (14) adapted to form an orifice for delivering the drink after opening the can by means of lever-type opening means (13), said head portion (11) being protected by a hygienic coating (10), **characterized in that** said coating (10) is constituted by a non-toxic and biodegradable substance which is capable of both being mantained in its liquid state by heating and setting within a few seconds upon cooling down, said substance being caused to adhere at least partially on to said zone (14) by simply dipping said head portion (11) of the can into said substance.

7. Drink container according to claim 6, **characterized in that** said coating (10) covers a circular sector of the head portion (11) by an angular extension of less than 180°.

8. Drink container according to claim 6 or 7, **characterized in that** said coating (10) is constituted by a thermoplastic rubber of the polyolefinic type.

## Patentansprüche

1. Verfahren zum hygienischen Abdichten von Getränkebehältern (12), insbesondere Aluminiumdosen, die mit einem vorgeschnittenen Bereich versehen sind, in dem eine Getränkeabgabeöffnung (14) durch den Einsatz einer automatischen Öffnungseinrichtung (13) hergestellt wird, wobei die Öffnung mit dem Mund des Verbrauchers in Kontakt gebracht werden kann und durch einen Überzug (10) geschützt wird, **dadurch gekennzeichnet**, daß der Überzug (10) auf den Kopfabschnitt (11) des Behälters (12) aufgetragen wird, indem lediglich der Abschnitt in ein Bad aus einer nichttoxischen und biologisch abbaubaren oder recyclebaren Substanz getaucht wird, die durch Erwärmen in ihrem flüssigen Zustand gehalten wird und anhaften sowie innerhalb Weniger Sekunden nach dem Entfernen des Behälters aus dem Bad aushärten kann, wobei der Überzug (10) sich soweit erstreckt, daß er wenigstens einen Teil der Öffnung (14) abdeckt.

2. Verfahren nach Anspruch 1, **dadurch gekennzeichnet,** daß sich der Überzug (10) so weit erstreckt, daß er einen Kreissektor (11) mit einer Winkelausdehnung abdeckt, die geringer ist als 180°.

3. Verfahren nach Anspruch 1 oder 2, **dadurch gekennzeichnet**, daß der Überzug (10) aus einem Polymer mit einem genau definierten Schmelzpunkt besteht.

4. Verfahren nach einem der vorangehenden Ansprüche, **dadurch gekennzeichnet**, daß der Überzug (10) aus einem Thermoplastkautschuk des Olefin-Typs besteht.

5. Verfahren nach einem der vorangehenden Ansprüche, **dadurch gekennzeichnet**, daß der Überzug (10) automatisch auf die Getränkebehälter (12) auf der gleichen Fertigungsstraße aufgetragen wird, auf der die Behälter gefüllt und sterilisiert werden, indem sie umgedreht und in das Bad der Überzugssubstanz (10) eingetaucht werden.

6. Getränkebehälter, insbesondere eine Aluminiumdose, der einen Kopfabschnitt (11) umfaßt, der mit einem vorgeschnittenen Bereich (14) versehen ist, der eine Öffnung zur Abgabe des Getränks nach dem Öffnen der Dose mit einer Hebel-Öffnungseinrichtung (13) bildet, wobei der Kopfabschnitt (11) durch einen hygienischen Überzug (10) geschützt ist, **dadurch gekennzeichnet**, daß der Überzug (10) durch eine nichttoxische und biologisch abbaubare Substanz gebildet wird, die sowohl durch Erwärmen in ihrem flüssigen Zustand gehalten werden kann, als auch innerhalb weniger Sekunden nach dem Abkühlen aushärten kann, wobei die Substanz wenigstens teilweise an dem Bereich (14) anhaftet, indem der Kopfabschnitt (11) der Dose einfach in die Substanz getaucht wird.

7. Getränkebehälter nach Anspruch 6, **dadurch gekennzeichnet**, daß die Beschichtung (10) einen Kreissektor des Kopfabschnitts (11) in einer Winkelausdehnung von weniger als 180° abdeckt.

8. Getränkebehälter nach Anspruch 6 oder 7, **dadurch gekennzeichnet**, daß der Überzug (10) aus einem Thermoplastkautschuk des Olefin-Typs besteht.

## Revendications

1. Procédé pour sceller de manière hygiénique des récipients de boisson **(12)**, en particulier des boîtes d'aluminium, pourvus d'une zone gravée à l'avance prévue pour créer un orifice de fourniture de boisson **(14)** en utilisant des moyens d'ouverture automatique **(13)**, ledit orifice étant prévu pour être amené en contact avec la bouche du consommateur et étant protégé par un revêtement **(10)**, caractérisé en ce que ledit revêtement **(10)** est appliqué à la portion de tête **(11)** du récipient **(12)** seulement en trempant ladite portion dans un bain de substance non-toxique et biodégradable ou recyclable, maintenue dans son état liquide par chauffage, et capable de coller et se durcir en quelques secondes lors du retrait du récipient du bain, ledit revêtement **(10)** se prolongeant pour couvrir au moins une partie dudit orifice **(14)**.

2. Procédé selon la revendication 1, caractérisé en ce que ledit revêtement **(10)** se prolonge pour recouvrir un secteur circulaire de la portion de tête **(11)** avec une prolongation angulaire inférieure à 180°.

3. Procédé selon la revendication 1 ou 2, caractérisé en ce que ledit revêtement **(10)** est constitué d'un polymère ayant un point de fusion bien défini.

4. Procédé selon l'une quelconque des revendications précédentes, caractérisé en ce que ledit revêtement **(10)** est constitué d'un caoutchouc thermoplastique du type oléfinique.

5. Procédé selon l'une quelconque des revendications précédentes, caractérisé en ce que ledit revêtement **(10)** est appliqué d'une manière automatique aux récipients de boisson **(12)**, sur la même ligne que celle dans laquelle lesdits conteneurs sont remplis et stérilisés, en les retournant sens dessus dessous et en les trempant dans le bain de ladite substance de revêtement **(10)**.

6. Récipient de boisson en particulier une boîte d'aluminium, comprenant une portion de tête **(11)** pourvue d'une zone **(14)** gravée à l'avance, prévue pour former un orifice pour fournir la boisson après avoir ouvert la boîte à l'aide de moyens d'ouverture du type à levier **(13)**, ladite portion de tête **(11)** étant protégée par un revêtement hygiénique **(10)**, caractérisé en ce que ledit revêtement **(10)** est constitué par une substance non-toxique et biodégradable ou recyclable, capable à la fois d'être maintenue dans son état liquide par chauffage et de se durcir en quelques secondes lors du refroidissement, ladite substance se collant au moins partiellement sur ladite zone **(14)** simplement en trempant ladite portion de tête **(11)** de la boîte dans ladite substance.

7. Récipient de boisson selon la revendication 6, caractérisé en ce que ledit revêtement **(10)** couvre une section circulaire de la portion de tête **(11)** par un prolongement angulaire de moins de 180°.

8. Récipient de boisson selon la revendication 6 ou 7, caractérisé en ce que ledit revêtement **(10)** est constitué par un caoutchouc thermoplastique du type polyoléfinique.
